# EUROPÄISCHE PATENTANMELDUNG

(11) **EP 4 368 475 A1**
(43) Veröffentlichungstag der Anmeldung: **15.05.2024**
(21) Anmeldenummer: 22206165.7
(22) Anmeldetag: 08.11.2022
(51) Int. Cl.: B61L 27/57, B61L 27/60, G06Q 10/20

(54) **VERFAHREN ZUR WIEDERINBETRIEBNAHME EINES SCHIENENFAHRZEUGS**

(71) Anmelder: Siemens Mobility AG, 8304 Wallisellen (CH)
(72) Erfinder: Haus, Andreas, 5430 Wettingen (CH)
(74) Vertreter: Siemens Patent Attorneys

(57) **Zusammenfassung**

Der vorliegenden Erfindung liegt die Aufgabe zugrunde, ein Verfahren zur Übernahme von Materialen und/oder Werkstücken mit zugesicherten Eigenschaften und/oder Parametern anzugeben, mit dem es möglich ist, das Vorliegen dieser zugesicherten Eigenschaften und/oder Parameter bestätigen zu können und zudem auch diesen Nachweis für eine unbegrenzte Zeitdauer und immer wieder abrufbar zur Verfügung zu stellen.

Diese Aufgabe wird erfindungsgemäss durch ein Verfahren zur Wiederinbetriebnahme eines Schienenfahrzeugs nach einem behördlich für eine Zertifizierung klassifizierten Eingriff in eine betriebsrelevante Funktionalität des Schienenfahrzeugs, umfassend die folgenden Verfahrensschritte:
a) Durchführen des Eingriffs an dem Schienenfahrzeug;
b) Bereitstellen einer die Eigenschaften des Eingriffs spezifizierenden Wiederinbetriebnahme-Dokumentation;
c) Definieren von Bedingungen und/oder Eigenschaften, denen das Schienenfahrzeug nach dem Eingriff genügen muss, in einem Smart Contract;
d) Übertragen der Wiederinbetriebnahme-Dokumentation in einen mit einer Distributed Ledger Software programmierten Smart Contract, wobei optional auch in den Bedingungen und/oder Eigenschaften geforderte Zahlenwerte abgerufen und in den Smart Contract übernommen werden;
e) Durchführen eines definierten Prüfprozesses für die Wiederinbetriebnahme-Dokumentation unter Prüfung auf die definierten Eigenschaften und/oder Bedingungen, ggfs. unter optionalem Einbezug der zuvor übernommenen Zahlenwerte;
f) bei positivem Abschluss des Prüfprozesses Erstellen einer Wiederinbetriebnahme-Bescheinigung und Speichern der Wiederinbetriebnahme-Bescheinigung als Transaktion einer Blockchain;
g) Kommunizieren eines Links oder eines Datencodes zum Zugang zu der in der Blockchain abgespeicherten Wiederinbetriebnahme-Bescheinigung an einen Betreiber des Schienenfahrzeugs; und
h) Wiederinbetriebnehmen des Schienenfahrzeugs nach einer erfolgreichen Überprüfung auf ein Vorliegen der Wiederinbetriebnahme-Bescheinigung.

## Beschreibung

Die vorliegende Erfindung betrifft ein Verfahren zur Wiederinbetriebnahme eines Schienenfahrzeugs nach einem behördlich für eine Zertifizierung klassifizierten Eingriff in eine betriebsrelevante Funktionalität des Schienenfahrzeugs.

Schienenfahrzeuge aller Art, wie Lokomotiven, Steuerwagen, Triebwagen, Personenwaggons, Güterwaggons etc., unterliegen in Abhängigkeit von ihren für einen sicheren Eisenbahnbetrieb relevanten Funktionalitäten regelmässigen Überprüfungen und Wartungen. Ebenso müssen derartige Schienenfahrzeuge im Falle von Funktionsstörungen in entsprechenden Werkstätten durch geeignetes Personal repariert werden.

Für diese Werkstätten existiert eine europäische Verordnung Nr. 445/2011, die detailliert darlegt, welche Anforderungen eine derartige Werkstätte (ECM = Entity in Charge of Maintenance) zu erfüllen hat. Jede entsprechend registrierte ECM muss daher für alle unter die Richtlinie über Eisenbahnsicherheit fallenden Fahrzeuge nachweisen, dass sie die Anforderungen des Anhangs II dieser sogenannten ECM-Verordnung erfüllt. Für derartige ECM's, die auf einem übergeordneten Eisenbahnnetz verkehrende Eisenbahnfahrzeuge instand halten will und von Artikel 3 Absatz 2 der Durchführungsverordnung (EU) 2019/779 erfasst ist, bedarf es zudem einer Instandhaltungsstellen-Bescheinigung (verpflichtende Zertifizierung). Ab dem 16.06.2020 erfolgt die Zertifizierung EU-weit einheitlich nach der Durchführungsverordnung (EU) 2019/779 vom 16.06.2019. Soweit es Güterwagen betrifft, muss die ECM schon seit 2013 zertifiziert sein. Bereits erteilte Bescheinigungen nach der Verordnung (EU) Nr. 445/2011 behalten ihre Gültigkeit, sie werden als gleichwertig anerkannt. Die Zertifizierung der anderen Stellen, die der Zertifizierungspflicht unterliegen, muss bis zum 16.06.2022 abgeschlossen sein. Die Zertifizierung muss bei einer zuständigen ECM-Zertifizierungsstelle, die in der European Railway Agency Database of Interoperability and Safety (ERADIS, https://eradis.era.europa.eu/) gelistet ist, beantragt werden.

Im Zuge einer derartigen Instandhaltung darf das Schienenfahrzeug erst wieder in Verkehr gebracht werden, wenn von der ECM eine entsprechende Wiederinbetriebnahme-Bescheinigung (WIB) für dieses Schienenfahrzeug ausgestellt worden ist. Für die Erstellung einer derartigen WIB sind nur bestimmte Personen innerhalb einer ECM zugelassen, die das WIB nach einem vorgegebenen Standard zu erstellen haben.

Üblicherweise erfolgt die Bereitstellung des WIB heutzutage in Form eines pdf-Dokuments, das von einem zugelassenen ECM-Prüfer abgestempelt und signiert wird. Dieses signierte pdf-Dokument ist dann zuverlässig und wiederauffindbar zu archivieren und zudem auch an den Betreiber (EVU = Eisenbahnverkehrsunternehmen) des Schienenfahrzeugs zu übermitteln. Das EVU legt dieses signierte pdf-Dokument dann ebenfalls zuverlässig und wiederauffindbar als Nachweis für die Betriebssicherheit seines Schienenfahrzeugs in seiner eigenen Datenbank ab und kann nun das Schienenfahrzeug wieder in Verkehr bringen.

Es ist leicht nachvollziehbar, dass dieses Verfahren zur Erbringung des Nachweises der Betriebssicherheit eines gewarteten Schienenfahrzeugs aufwendig und fehlerbehaftet ist. Oft sind derartige Nachweise über die Betriebssicherheit eines gewarteten und/oder reparierten Schienenfahrzeugs schon nach kurzer Zeit wegen Rechneraustausch, Datenbankausfällen und dergleichen nicht mehr zuverlässig auffindbar und damit verfügbar.

Der vorliegenden Erfindung liegt daher die Aufgabe zugrunde, ein Verfahren zur Wiederinbetriebnahme eines Schienenfahrzeugs nach einem behördlich für eine Zertifizierung klassifizierten Eingriff in eine betriebsrelevante Funktionalität des Schienenfahrzeugs anzugeben, mit dem es möglich ist, das Vorliegen dieser zugesicherten Betriebssicherheit bestätigen zu können und zudem auch diesen Nachweis für eine unbegrenzte Zeitdauer und immer wieder abrufbar zur Verfügung zu stellen.

Diese Aufgabe wird erfindungsgemäss durch ein Verfahren zur Wiederinbetriebnahme eines Schienenfahrzeugs nach einem behördlich für eine Zertifizierung klassifizierten Eingriff in eine betriebsrelevante Funktionalität des Schienenfahrzeugs gelöst, welches die folgenden Verfahrensschritte umfasst:
a) Durchführen des Eingriffs an dem Schienenfahrzeug;
b) Bereitstellen einer die Eigenschaften des Eingriffs spezifizierenden Wiederinbetriebnahme-Dokumentation;
c) Definieren von Bedingungen und/oder Eigenschaften, denen das Schienenfahrzeug nach dem Eingriff genügen muss, in einem Smart Contract;
d) Übertragen der Wiederinbetriebnahme-Dokumentation in einen mit einer Distributed Ledger Software programmierten Smart Contract, wobei optional auch in den Bedingungen und/oder Eigenschaften geforderte Zahlenwerte abgerufen und in den Smart Contract übernommen werden;
e) Durchführen eines definierten Prüfprozesses für die Wiederinbetriebnahme-Dokumentation unter Prüfung auf die definierten Eigenschaften und/oder Bedingungen, ggfs. unter optionalem Einbezug der zuvor übernommenen Zahlenwerte;
f) bei positivem Abschluss des Prüfprozesses Erstellen einer Wiederinbetriebnahme-Bescheinigung und Speichern der Wiederinbetriebnahme-Bescheinigung als Transaktion einer Blockchain;
g) Kommunizieren eines Links oder eines Datencodes zum Zugang zu der in der Blockchain abgespeicherten Wiederinbetriebnahme-Bescheinigung an einen Betreiber des Schienenfahrzeugs; und
h) Wiederinbetriebnehmen des Schienenfahrzeugs nach einer erfolgreichen Überprüfung auf ein Vorliegen der Wiederinbetriebnahme-Bescheinigung.

Durch dieses Vorgehen wird mittels der Smart Contracts sichergestellt, dass alle Anforderungen an die Wartung und Betriebssicherheit des Schienenfahrzeugs erfüllt worden sind. Die Distributed Ledger Technologie (DLT) mit einer Blockchain für die Datenablage und Datensicherheit im Hintergrund garantiert die Unveränderbarkeit der in dem Smart Contract vorhandenen Daten, die vom ECM in Form der WIB erstellt worden sind. Auf diese Weise können die beteiligten Stellen eine erhebliche Zeitersparnis erzielen, weil die Prüfungen zum Vorliegen der Verkehrssicherheit nach einer Intervention am Schienenfahrzeug nun anhand der in der Blockchain abgespeicherten Transaktion vorgenommen werden und keine Protokolle oder pdf-Dokumente mehr verwaltet und auch nicht mehr in Form von pdf-Dokumenten per Email versendet werden müssen. Auch nachfolgende Abteilungen und Prozesse in der späteren Bearbeitungs- und Wartungskette des Schienenfahrzeugs können ohne zusätzlichen Aufwand beispielsweise aus einem ERP-System die Bestätigung der Betriebssicherheit mit den zugesicherten Eigenschaften und/oder Parametern beziehen.

Typischerweise wird unter einem Eingriff am Schienenfahrzeug eine am Schienenfahrzeug durchgeführte Wartungs- und/oder Reparaturmassnahme verstanden.

Zur Gewährleistung der Belastbarkeit der WIB kann es vorgesehen sein, dass die Wiederinbetriebnahme-Dokumentation nur durch eine mit entsprechenden Rechten ausgestattete Person erstellt werden darf.

Um die Auslesbarkeit des WIB auch im rauen Gleis- und Werkstattumfeld sicherstellen zu können, kann der zuvor erwähnte Datencode zum Abrufen der WIB in Form eines QR-Codes bereitgestellt werden.

Bevorzugte Ausführungsbeispiele der vorliegenden Erfindung werden nachfolgend näher erläutert. Dabei zeichnet sich ein bevorzugtes Ausführungsbeispiel für das erfindungsgemässe Verfahren zur Wiederinbetriebnahme eines Schienenfahrzeugs nach einem behördlich für eine Zertifizierung klassifizierten Eingriff in eine betriebsrelevante Funktionalität des Schienenfahrzeugs durch die folgenden Verfahrensmerkmale aus: Für das Verfahren grundlegend sind die Bestimmungen und zugrundeliegenden Anforderungen an das Instandhaltungssystem der Reparaturwerkstatt (ECM = Entity in Charge of Maintenance) gemäss der EU-Verordnung Nr. 445/2011.

Kommt es nun zum Beispiel zur Instandsetzung der Bremsen, der Odometrie, des Stromabnehmers, des Motors, des Schaltschranks oder dergleichen auf einem Schienenfahrzeug, beispielsweise einer Lokomotive oder einem Triebwagen mit Antriebseinheit auf einem Drehgestell oder dergleichen, muss für die Wiederinbetriebnahme des Schienenfahrzeugs auf dem Eisenbahnnetz eine nach der oben genannten EU-Verordnung konform ausgestellte Wiederinbetriebnahme-Bescheinigung - nachfolgend WIB genannt - vorliegen. Derartige Nachweise für die Betriebssicherheit des Schienenfahrzeugs sind oft nur sehr kurze Zeit gültig, da die nächste Intervention am Schienenfahrzeug die vorherige WIB wieder ersetzt. Das vorliegende Verfahren zeigt damit nun einen Weg auf, bei dem der Aufwand für die Datenablage und Archivierung stark optimiert worden ist. Durch dieses Verfahren ist es daher nicht mehr notwendig, die WIB nach ECM-Verordnung zu stempeln, zu unterschreiben und in Form eines pdf-Dokuments dem Kunden, hier in der Regel ein Eisenbahnverkehrsunternehmen EVU, zur Verfügung zu stellen und gleichzeitig zu archivieren.

Gemäss dem vorliegenden erfindungsgemässen Verfahren wird nach jeder Intervention an dem Schienenfahrzeug von dem verantwortlichen Service-Techniker (ECM4) ein WIB vorbereitet und durch einen speziell autorisierten Flotten-Manager (ECM3) ausgestellt. Die Grundlage der WIB beruht dabei aus den ausgeführten und durch den Service-Techniker (ECM4) dokumentierten Arbeiten und der nachfolgend von ihm erteilten Betriebsfreigabe gemäss ECM-Verordnung (siehe oben EU-Nr. 445/2011) .

Die für diese WIB zugrunde liegende Information wird als Zertifikat in einem Distributed Ledger gespeichert und durch einen programmierten Smart Contract auf Vollständigkeit geprüft. Wenn alle durch den Smart Contract geforderten Bedingungen erfüllt sind, wird daraus in der Distributed Ledger Technologie ein digitales unveränderbares Zertifikat erstellt, welches dann als Transaktion in einer Blockchain abgelegt wird und als Beleg für die betriebssichere Wiederinbetriebnahme des Schienenfahrzeugs für das EVU gilt.

Dieser Nachweis kann somit als Link bzw. Datacode (z.B. QR-Code) dem EVU zur Verfügung gestellt werden. Es ist damit weiter nicht mehr erforderliche, diese als Transaktion einer Blockchain dokumentierte WIB in einer oder mehreren Datenbanken des ECM's oder des EVU's abzulegen, da dieser Nachweis nun revisionssicher in der Blockchain archiviert ist und jederzeit entsprechenden Behörden vorgewiesen werden kann. Das WIB in der Form dieses unveränderlichen Zertifikats belegt so die ausgeführten Arbeiten des Service-Technikers (ECM4), die Prüfung durch den Flotten-Manager (ECM3) und gibt dem EVU die Sicherheit, das Schienenfahrzeug wieder in Verkehr setzen zu dürfen.

Das Versenden des unveränderlichen Zertifikats an das jeweilige EVU kann zudem automatisiert erfolgen. Dieses Versenden kann sich aber auch nach Absprache erübrigen, weil das EVU selbst ja über den Link oder den Datacode Zugriff auf das in der Blockchain gespeicherte Zertifikat hat. Dieser Zugriff erfolgt bei der Distributed Ledger Technologie in einfacher Weise durch die Zuordnung von entsprechenden Rollen der an dem System angemeldeten Nutzer.

Das unveränderliche gespeicherte und jederzeit wieder aufrufbare Zertifikat ersetzt so die Papierdokumente oder die signierten pdf-Dokumente. Eine API nimmt dabei beispielsweise den vom Flotten-Manager (ECM3) ausgestellten Datensatz entgegen. Das API kann dabei beispielsweise über eine Webseite angesprochen oder direkt aus einem ERP-System oder direkt aus einem programmierten pdf-Dokument heraus aufgerufen werden. Mit der Distributed Ledger Technologie können diese erstellten Daten sicher und unveränderbar gespeichert werden. Diese Daten können so direkt aus dem Instandhaltungssystem die durchgeführten Arbeiten - Grundlage für die Daten ist hier die Betriebsfreigabe des ECM4 - belegen, so wie dies heute schon besteht. Die Programmierung des Smart Contracts stellt dann sicher, dass alle behördlich vorgeschriebenen und relevanten Informationen für die Gültigkeit der WIB in diesen Daten enthalten und korrekt übernommen worden sind. Somit kann sich das EVU darauf verlassen, dass seinen Anforderungen genüge getan worden und die WIB gültig ist. Der Distributed Ledger speichert diese WIB dann sicher und jederzeit wieder aufrufbar.

Durch die entsprechende Programmierung der Smart Contracts ist somit sichergestellt, dass die WIBs die Anforderungen erfüllen und gültig sind. Eine separate Archivierung der WIB bei allen Beteiligten kann somit entfallen. Die im Hintergrund eingesetzte Distributed Ledger Technologie (DLT) mit einer Blockchain für die Datenablage und Datensicherheit garantiert die Unveränderbarkeit und jederzeitige Wiederauffindbarkeit der WIBs. Alle betroffenen Stellen sparen so signifikant Arbeitszeit ein, indem die Kontrollen der alten pdf-Dokumente wegfallen und keine Dokumente mehr ausserhalb der Blockchain abgelegt werden müssen. Auch die nachfolgenden Parteien, die eine Weiterverarbeitung der WIB in irgendeiner Art und Weise durchführen wollen/müssen, können so ohne Zusatzaufwand die erstellte WIB auf ihre Korrektheit und Gültigkeit hin prüfen. Der gesamte Wiederinbetriebnahmeprozess wird somit schlanker und gewährleistet zudem eine zusätzliche Sicherheit gegen menschliche Fehler in dieser Verfahrenskette. Die in der Blockchain abgelegten WIBs benötigen auch bei den beteiligten Nutzern keinen Speicherplatz auf Servern mehr, weil diese Transaktionen im Wege der Blockchain auch sicher in der Cloud verwahrt werden können.

Nachstehend nun noch einmal kurz die wesentlichen Verfahrensschritte für das Verfahren zur Wiederinbetriebnahme eines Schienenfahrzeugs nach einem behördlich für eine Zertifizierung klassifizierten Eingriff in eine betriebsrelevante Funktionalität des Schienenfahrzeugs. Damit sind in der Regel Wartungs- und Reparaturarbeiten an sicherheitsrelevanten Systemen des Schienenfahrzeugs gemeint, wie z.B. Bremssystem, Odometrie, Antrieb, elektrische Verschaltung, Stromabnehmer und vieles mehr.
a) Durchführen des Eingriffs/der Arbeiten an dem Schienenfahrzeug;
b) Bereitstellen einer die Eigenschaften des Eingriffs spezifizierenden Wiederinbetriebnahme-Dokumentation, wie zum Beispiel die vom ECM3 und ECM4 ausgestellte Dokumentation in Form des WIBs;
c) Definieren von Bedingungen und/oder Eigenschaften, denen das Schienenfahrzeug nach dem Eingriff genügen muss, in einem Smart Contract, d.h. entsprechende Programmierung des Smart Contract mit den relevanten Prüfkriterien, auf die die erstellte WIB hinsichtlich der Betriebssicherheit des gewarteten/reparierten Schienenfahrzeugs geprüft wird;
d) Übertragen der Wiederinbetriebnahme-Dokumentation in einen mit einer Distributed Ledger Software programmierten Smart Contract, wobei optional auch in den Bedingungen und/oder Eigenschaften geforderte Zahlenwerte abgerufen und in den Smart Contract übernommen werden;
e) Durchführen eines definierten Prüfprozesses für die Wiederinbetriebnahme-Dokumentation unter Prüfung auf die definierten Eigenschaften und/oder Bedingungen, ggfs. unter optionalem Einbezug der zuvor übernommenen Zahlenwerte;
f) bei positivem Abschluss des Prüfprozesses Erstellen einer Wiederinbetriebnahme-Bescheinigung WIB und Speichern der Wiederinbetriebnahme-Bescheinigung als Transaktion einer Blockchain;
g) Kommunizieren eines Links oder eines Datencodes zum Zugang zu der in der Blockchain abgespeicherten Wiederinbetriebnahme-Bescheinigung zumindest an einen Betreiber des Schienenfahrzeugs; und
h) Wiederinbetriebnehmen des Schienenfahrzeugs nach einer erfolgreichen Überprüfung auf ein Vorliegen der Wiederinbetriebnahme-Bescheinigung.

## Patentansprüche

1. Verfahren zur Wiederinbetriebnahme eines Schienenfahrzeugs nach einem behördlich für eine Zertifizierung klassifizierten Eingriff in eine betriebsrelevante Funktionalität des Schienenfahrzeugs,
umfassend die folgenden Verfahrensschritte:
a) Durchführen des Eingriffs an dem Schienenfahrzeug;
b) Bereitstellen einer die Eigenschaften des Eingriffs spezifizierenden Wiederinbetriebnahme-Dokumentation;
c) Definieren von Bedingungen und/oder Eigenschaften, denen das Schienenfahrzeug nach dem Eingriff genügen muss, in einem Smart Contract;
d) Übertragen der Wiederinbetriebnahme-Dokumentation in einen mit einer Distributed Ledger Software programmierten Smart Contract, wobei optional auch in den Bedingungen und/oder Eigenschaften geforderte Zahlenwerte abgerufen und in den Smart Contract übernommen werden;
e) Durchführen eines definierten Prüfprozesses für die Wiederinbetriebnahme-Dokumentation unter Prüfung auf die definierten Eigenschaften und/oder Bedingungen, ggfs. unter optionalem Einbezug der zuvor übernommenen Zahlenwerte;
f) bei positivem Abschluss des Prüfprozesses Erstellen einer Wiederinbetriebnahme-Bescheinigung und Speichern der Wiederinbetriebnahme-Bescheinigung als Transaktion einer Blockchain;
g) Kommunizieren eines Links oder eines Datencodes zum Zugang zu der in der Blockchain abgespeicherten Wiederinbetriebnahme-Bescheinigung an einen Betreiber des Schienenfahrzeugs; und
h) Wiederinbetriebnehmen des Schienenfahrzeugs nach einer erfolgreichen Überprüfung auf ein Vorliegen der Wiederinbetriebnahme-Bescheinigung.

2. Verfahren nach Anspruch 1,
**dadurch gekennzeichnet, dass**
als Eingriff am Schienenfahrzeug eine Wartungs- und/oder Reparaturmassnahme durchgeführt wird.

3. Verfahren nach Anspruch 1 oder 2,
**dadurch gekennzeichnet, dass**
die Wiederinbetriebnahme-Dokumentation nur durch eine mit entsprechenden Rechten ausgestattete Person erstellt wird.

4. Verfahren nach einem der Ansprüche 1 bis 3,
**dadurch gekennzeichnet, dass**
der Datencode in Form eines QR-Codes bereitgestellt wird.
